# EUROPÄISCHE PATENTSCHRIFT

(11) **EP 3 807 479 B1**
(45) Veröffentlichungstag und Bekanntmachung des Hinweises auf die Patenterteilung: **29.10.2025**
(21) Anmeldenummer: 19745986.0
(22) Anmeldetag: 09.07.2019
(51) Int. Cl.: E04H 12/10, H02G 7/14

(54) **VORRICHTUNG UND VERFAHREN ZUR SCHWINGUNGSDÄMPFUNG IN HOCHSPANNUNGSEINRICHTUNGEN**
APPARATUS AND METHOD FOR DAMPING VIBRATIONS IN HIGH-VOLTAGE DEVICES
DISPOSITIF ET PROCÉDÉ POUR L'AMORTISSEMENT DES VIBRATIONS DANS DES DISPOSITIFS À HAUTE TENSION

(30) Priorität: 08.08.2018 DE 102018213305
(43) Veröffentlichungstag der Anmeldung: 21.04.2021
(73) Patentinhaber: Siemens Energy Global GmbH & Co. KG, 81739 München (DE)
(72) Erfinder: HEINRICH, Ulf, 14482 Potsdam (DE); LEHMANN, Dirk, 10407 Berlin (DE); RAMOS CORDERO, Edgar Armando, 10587 Berlin Charlottenburg (DE); RIEDEL, Frank, 13127 Berlin (DE)
(86) Internationale Anmeldenummer: PCT/EP2019/068331
(87) Internationale Veröffentlichungsnummer: WO 2020/030362

(56) Entgegenhaltungen:
- EP-A2- 0 783 078
- DE-U1- 29 619 383
- JP-A- 2011 162 943
- JP-A- H06 323 325
- US-A- 6 129 326
- US-A1- 2012 131 877
- US-A1- 2016 076 581

## Beschreibung

Die Erfindung betrifft eine Vorrichtung und ein Verfahren zur Schwingungsdämpfung in Hochspannungseinrichtungen, mit einer Trägeranordnung für die Hochspannungseinrichtung, welche Tragelemente umfasst, die über Verbindungselemente miteinander verbunden sind.

Vorrichtungen für Hochspannungseinrichtungen, insbesondere für Einrichtungen im Bereich von bis zu 1200 kV, sind z. B. aus der EP 0 783 078 A2 und der US 2012/131877 A1 bekannt. Dabei sind z. B. Hochspannungskabel als Hochspannungseinrichtungen an einem Freileitungsmast als Vorrichtung für Hochspannungseinrichtungen aus Stahlprofil-Gitterstäben angebracht. Weitere Hochspannungseinrichtungen sind unter anderem z. B. Instrument Transformer, Hochspannungsleistungsschalter und/oder Trenner, welche auf Trägern bzw. Trägeranordnungen aus Stahlprofil-Gitterstäben als Vorrichtung für Hochspannungseinrichtungen angeordnet sind. Die Gitterstäbe der Trägeranordnung, z. B. aus Stahl, als Tragelemente haben insbesondere ein L-, T- und/oder Doppel-T-Profil und sind über Verbindungselemente, insbesondere Schrauben und Muttern, miteinander verbunden. Zwischenelemente, z. B. in Form von Unterlegscheiben wie aus der JP 2011 162943 A, der JP H06 323325 A, der US 2016/076581 A1 und der DE 296 19 383 U1 bekannt, übertragen eine Spannkraft der Schraubverbindung auf die Gitterstäbe und führen über eine Vorspannkraft zu einer mechanisch steifen Verbindung zwischen den Gitterstäben. Aus der US 6129326 A ist eine Schraubverbindung mit einer Baugruppe zwischen zwei Komponenten bekannt, wobei eine Komponente Vibrationen erfahren kann. Die Baugruppe umfasst einen Stapel von miteinander verklebten Scheiben.

Die Schrauben als Verbindungselemente sind mechanisch fest in Bohrungen der Gitterstäbe fixiert, wobei im Bereich der Bohrungen Versprödungen auftreten können, von welchen ausgehend ein Bruch von Gitterstäben bei mechanischer Belastung z. B. durch Wind erfolgen kann. Um dies zu verhindern wird über die Form der Unterlegscheiben als Zwischenelemente die Vorspannkraft der Schraubverbindung auf Bereiche der Gitterelemente erstreckt, welche nicht verspröden. Dadurch wird eine langzeitstabile, feste, steife mechanische Verbindung zwischen den Gitterelementen als Tragelemente der Trägeranordnung für die Hochspannungseinrichtungen erreicht.

Bei mechanischer Belastung der Vorrichtungen, z. B. durch Wind und/oder Erdbeben, wird ein Teil der Belastung über die Elastizität der Tragelemente ausgeglichen. Elastische Bereiche der Tragelemente können sich elastisch und/oder plastisch verformen, und dadurch wird mechanische Energie, welche durch Wind und/oder Erdstöße auf die Vorrichtung übertragen wird, absorbiert und z. B. in Wärmeenergie umgewandelt. Große elastische und/oder plastische Verformungen der Tragelemente, insbesondere über längere Zeiträume hinweg und/oder häufig auftretend, führen zu einem Bruch von Tragelementen, und somit zu einer irreversiblen Beschädigung und/oder einem Ausfall der Vorrichtung und damit einem Ausfall der Hochspannungseinrichtung. Dämpfungseinrichtungen im Fundament, z. B. über große Federn, können mechanische Energie absorbieren, sind aber aufwendig und teuer.

Aufgabe der vorliegenden Erfindung ist es, eine Vorrichtung und ein Verfahren zur Schwingungsdämpfung in Hochspannungseinrichtungen anzugeben, welche die zuvor beschriebenen Probleme lösen. Insbesondere ist es Aufgabe, eine einfache und kostengünstige, effektive Schwingungsdämpfung zu erreichen, um irreversible Beschädigungen der Vorrichtung und somit der Hochspannungseinrichtung, insbesondere bei Umwelteinflüssen wie z. B. Wind und/oder bei Erdbeben, zu vermeiden.

Die angegebene Aufgabe wird erfindungsgemäß durch eine Vorrichtung zur Schwingungsdämpfung in Hochspannungseinrichtungen gemäß Anspruch 1 und durch ein Verfahren zur Schwingungsdämpfung in Hochspannungseinrichtungen, insbesondere unter Verwendung einer zuvor beschriebenen Vorrichtung, gemäß Patentanspruch 14 gelöst. Vorteilhafte Ausgestaltungen der erfindungsgemäßen Vorrichtung zur Schwingungsdämpfung in Hochspannungseinrichtungen und/oder des Verfahrens zur Schwingungsdämpfung in Hochspannungseinrichtungen, insbesondere unter Verwendung einer zuvor beschriebenen Vorrichtung, sind in den Unteransprüchen angegeben. Dabei sind Gegenstände der Hauptansprüche untereinander und mit Merkmalen von Unteransprüchen sowie Merkmale der Unteransprüche untereinander kombinierbar.

Eine erfindungsgemäße Vorrichtung zur Schwingungsdämpfung in Hochspannungseinrichtungen umfasst eine Trägeranordnung für Elemente der Hochspannungseinrichtung mit Tragelementen, die über Verbindungselemente miteinander verbunden sind. Zwischen den Verbindungselementen und den Tragelementen und/oder zwischen unterschiedlichen Tragelementen sind Zwischenelemente angeordnet, welche ausgebildet sind eine Schwingungsdämpfung zu bewirken.

Durch die Anordnung von Zwischenelementen zwischen den Tragelementen und/oder zwischen den Verbindungselementen und den Tragelementen, wird eine einfache, kostengünstige und effektive Schwingungsdämpfung erreicht. Dadurch können irreversible Beschädigungen der Vorrichtung und somit der Hochspannungseinrichtungen, insbesondere bei Umwelteinflüssen wie z. B. Wind und/oder bei Erdbeben, vermieden werden. Die Zwischenelemente sind ausgebildet, Bewegungen bzw. Schwingungen der erfindungsgemäßen Vorrichtung in Verbindung mit den Verbindungselementen und/oder Tragelementen zu absorbieren, z. B. durch Umwandlung der Schwingungsenergie in Reibungswärme. Im Unterschied zum Stand der Technik werden Schwingungen in der erfindungsgemäßen Vorrichtung nicht ausschließlich durch elastische und/oder plastische Verformungen der Tragelemente gedämpft bzw. absorbiert, bei steifer Verbindung der Tragelemente über vorgespannte Verbindungselemente, sondern zusätzlich absorbieren die Zwischenelemente im Zusammenwirken mit den Trag- und/oder Verbindungselementen Bewegungsenergie.

Die Zwischenelemente sind beschichtete Unterlegscheiben, welche eine mechanisch feste Verbindung der Tragelemente untereinander über die Verbindungselemente ermöglichen, bei gleichzeitiger Flexibilität bezüglich Bewegungen der Tragelemente gegeneinander, insbesondere bei starken Krafteinwirkungen, z. B. bei Wind und/oder bei Erdbeben, über Gleitreibung zwischen den Zwischenelementen und den Trag- und/oder Verbindungselementen. Jeweils ein Stapel von unterschiedlichen Zwischenelementen, einem Zwischenelement mit Beschichtung für geringere Reibung und einem Zwischenelement mit höherer Reibung, bildet in Verbindung mit wenigstens einem Tragelement und mit wenigstens einem Verbindungselement ein Dämpfungselement für mechanische Schwingungen aus, mit einem Stapel von unterschiedlichen Zwischenelementen zwischen zwei Tragelementen und/oder einem Stapel von unterschiedlichen Zwischenelementen jeweils zwischen einem jeweiligen Träger und einem Verbindungselement. Die Beschichtung der Unterlegscheiben in Verbindung mit der mechanischen Vorspannung der Verbindungselemente, ermöglicht eine vorbestimmte Einstellung der Reibung zwischen Zwischenelementen und den Trag- und/oder Verbindungselementen, und somit eine definierte Dämpfung von Bewegungen bzw. Schwingungen zwischen Tragelementen abhängig der Haft- und/oder Gleitreibungskoeffizienten der Beschichtung der Zwischenelemente mit den Materialien der Trag- und/oder Verbindungselemente.

Die Zwischenelemente können mit einem Polymer, insbesondere Teflon, PTFE und/oder PCTFE, einem Metall, insbesondere Silber, und/oder Graphit beschichtet sein. Dadurch wird eine stabile mechanische Verbindung der Tragelemente untereinander über die Haftreibung zwischen den beschichteten Zwischenelementen und den Trag- und/oder Verbindungselementen erreicht. Bei hohen Kräften durch Bewegungen bzw. Schwingungen zwischen Tragelementen, ermöglichen die beschichteten Zwischenelemente eine flexible Bewegung der Tragelemente gegeneinander, wobei Bewegungs- bzw. Schwingungsenergie absorbiert wird, durch die Überwindung der Haftreibung und durch die Gleitreibung. Die Energie wird in Wärme umgesetzt und an die Umgebung, insbesondere die Umgebungsluft abgegeben, ohne zu irreversiblen plastischen Deformationen oder Bruch der Tragelemente zu führen. Über die Art der Beschichtung, d. h. die Oberflächenrauigkeit und/oder die Materialwahl der Beschichtung, kann der Haft- und Gleitreibungskoeffizient zwischen den Elementen vorbestimmt eingestellt werden, womit in Verbindung mit der Vorspannkraft der Verbindungselemente die Steifigkeit der Vorrichtung, die Dämpfungskonstante sowie die Energieabsorption insbesondere abhängig der Schwingungsamplitude und/oder -frequenz eingestellt werden können.

Die Beschichtung der Zwischenelemente kann einen bestimmten Gleit-Reibungskoeffizienten auf dem Material der Tragelemente aufweisen, insbesondere im Bereich von 0,01 bis 0,3 und/oder im Bereich von größer 1. Ein bestimmter Gleit- und/oder HaftReibungskoeffizient ermöglicht eine erfindungsgemäße Vorrichtung mit vorbestimmter mechanischer Steifigkeit, welche bei Bewegungen bzw. Schwingungen ab bestimmten auftretenden Kräften vorbestimmt die Bewegungen bzw. Schwingungen dämpft. Bei geringem Gleit-Reibungskoeffizienten können schon kleinere Kräfte, z. B. bei Wind, absorbiert werden, insbesondere auch bei Schwingungen höherer Frequenz. Bei geringem Gleit-Reibungskoeffizienten können größere Kräfte, z. B. bei Erdbeben, absorbiert werden, insbesondere bei Schwingungen geringer Frequenz. Die Vorrichtung ist dennoch steifer als bei Anwendung der meisten Dämpfersysteme, die aus dem Stand der Technik bekannt ist. Es erfolgt im Wesentlichen keine Änderung der Eigenfrequenz der Trägeranordnung.

Die Zwischenelemente können Unterlegscheiben aus einem elastischen Material, insbesondere Kunststoff und/oder Gummi sein und/oder umfassen. Dadurch ist ebenfalls eine Schwingungsdämpfung über die Zwischenelemente möglich.

Die Trägeranordnung kann ein Gittermast, insbesondere ein Stahlfachwerksmast und/oder T-förmiger Mast sein. Gittermasten ergeben bei geringen Kosten und geringem Materialaufwand gute Trageigenschaften, z. B. für Stromleitungen. Mit T-förmigen Mast sind Masten mit Armen, insbesondere zwei Armen und mehr, beschrieben.

Die Tragelemente können T-Träger, Doppel-T-Träger und/oder L-Träger sein, insbesondere aus Stahl. T-Träger und/oder Doppel-T-Träger, insbesondere aus Stahl, ergeben bei relativ geringem Eigengewicht eine hohe mechanische Steifigkeit, Langzeitstabilität und mechanische Festigkeit.

Die Verbindungselemente können Schrauben mit Muttern und/oder Bolzen sein, insbesondere aus Stahl. Dadurch sind stabile mechanische Verbindungen möglich, mit hohen Vorspannungen. Bei Schraubverbindungen kann die Vorspannung definiert gut eingestellt werden, und damit die Dämpfung der Vorrichtung über die Vorspannung und insbesondere über die Beschichtung sowie Materialwahl der Zwischenelemente.

Die Verbindungselemente können ausgebildet sein, die Tragelemente über Öffnungen in den Tragelementen, insbesondere durchgehende Bohrungen, zu verbinden. Dadurch ist eine kostengünstige Verbindung von Tragelementen möglich, z. B. über Bolzen und/oder Schrauben mit Muttern, über die Bohrungen bzw. in den Bohrungen gelagert.

Die Öffnungen können derart ausgestaltet sein, dass die Verbindungselemente in den Tragelementen beweglich gelagert sind, insbesondere mit einem Freiheitsgrad bezüglich der Bewegung abhängig einer zu dämpfenden Schwingung und/oder einer bestimmten Erdbebenstufe. Die Verbindungselemente können in den Öffnungen ein Spiel im Bereich von Mikrometern bis zu Millimetern aufweisen. In Verbindung mit der Zahl der Öffnungen bzw. Verbindungselemente, der Vorspannung und dem Reibungskoeffizienten kann über das Spiel im Bereich von Mikrometern bis zu Millimetern eine mechanische Festigkeit, Steifheit und Absorption von Bewegungsenergie der erfindungsgemäßen Vorrichtung gezielt eingestellt werden.

Jeweils wenigstens ein Zwischenelement, insbesondere zwei unterschiedliche Zwischenelemente, in Verbindung mit wenigstens einem Tragelement, insbesondere mit zwei Tragelementen, und mit wenigstens einem Verbindungselement, insbesondere wenigstens zwei unterschiedlichen Verbindungselementen, können ein Dämpfungselement für mechanische Schwingungen ausbilden. Die Reibung der Elemente gegeneinander ergibt die Dämpfungskonstante des Dämpfungselements für mechanische Schwingungen.

Jeweils ein Stapel von unterschiedlichen Zwischenelementen, insbesondere einem Zwischenelement mit Beschichtung und einem Zwischenelement für höhere Reibung, z. B. ohne Beschichtung oder mit Beschichtung mit höherem Gleitreibungskoeffizienten, kann in Verbindung mit zwei Tragelementen, und mit wenigstens einem Verbindungselement, ein Dämpfungselement für mechanische Schwingungen ausbilden. Dies ist insbesondere möglich mit einem Stapel von unterschiedlichen Zwischenelementen zwischen zwei Tragelementen und/oder einem Stapel von unterschiedlichen Zwischenelementen jeweils zwischen einem jeweiligen Träger und einem Verbindungselement. Über einen Stapel von unterschiedlichen Zwischenelementen, insbesondere mit jeweils unterschiedlichen Gleitreibungskoeffizienten, kann eine Dämpfungsrate der Vorrichtung gezielt eingestellt werden, insbesondere abhängig der zu dämpfenden Schwingungsfrequenz und/oder der Bewegungskraft, welche auf die erfindungsgemäße Vorrichtung wirkt.

Die Vorrichtung kann von einem Freileitungsmast, einem Tragmast eines Hochspannungsleistungsschalters und/oder einem Tragmast eines Instrument Transformers umfasst sein. Eine Dämpfung von Schwingungen und/oder Bewegungsenergie in dem Mast ermöglicht einen zuverlässigen Betrieb der Hochspannungseinrichtung, ohne die Gefahr von Ausfällen, insbesondere durch Bruch des Mastes z. B. bei Sturm und/oder Erdbeben. Ein erfindungsgemäßes Verfahren zur Schwingungsdämpfung in Hochspannungseinrichtungen, insbesondere unter Verwendung einer zuvor beschriebenen Vorrichtung umfasst, dass Verbindungselemente Tragelemente einer Trägeranordnung einer Hochspannungseinrichtung mechanisch stabil räumlich fixieren und beim Auftreten von mechanischen Schwingungen an der Hochspannungseinrichtung die Verbindungselemente über eine vorbestimmte Gleitreibung mit den Tragelementen sowie über ein räumlich vorbestimmtes Spiel bezüglich der Tragelemente die mechanische Schwingung definiert dämpfen.

Die Verbindungselemente können eine mechanische Schwingung zwischen Tragelementen dämpfen, durch zwischen den Tragelementen und/oder zwischen Tragelementen und Verbindungselementen angeordneten Zwischenelementen mit einem bestimmten Gleit-Reibungskoeffizienten zwischen Tragelement und Zwischenelement, insbesondere im Bereich von 0,01 bis 0,3 und/oder im Bereich von größer 1, insbesondere über eine Beschichtung der Zwischenelemente, und/oder durch ein vorbestimmtes Spiel der Verbindungselemente zu den Tragelementen, insbesondere im Bereich von Mikrometern bis hin zu Millimetern.

Die Vorteile des erfindungsgemäßen Verfahrens zur Schwingungsdämpfung in Hochspannungseinrichtungen, insbesondere unter Verwendung einer zuvor beschriebenen Vorrichtung, gemäß Anspruch 14 sind analog den zuvor beschriebenen Vorteilen der erfindungsgemäßen Vorrichtung zur Schwingungsdämpfung in Hochspannungseinrichtungen gemäß Anspruch 1 und umgekehrt.

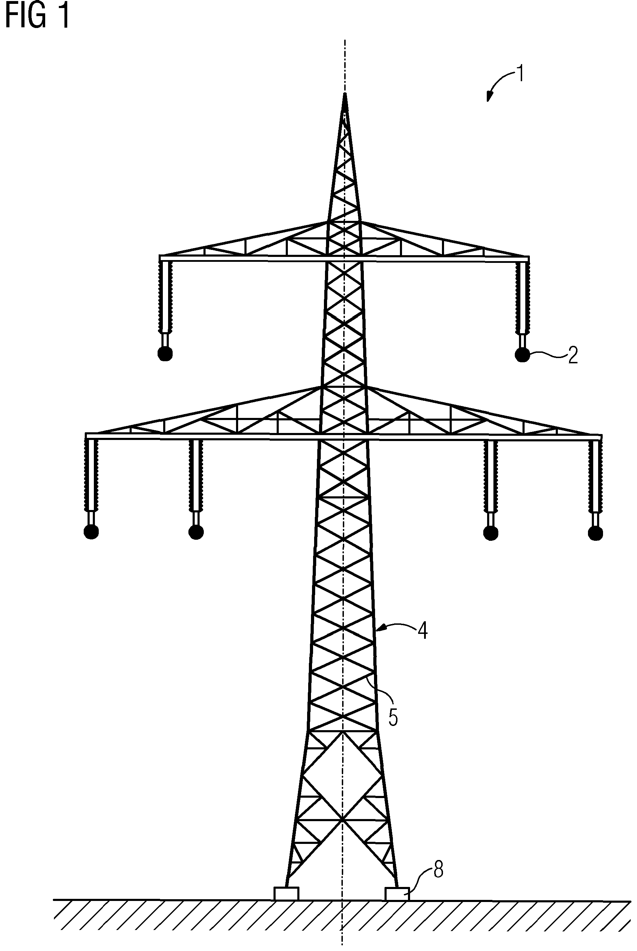

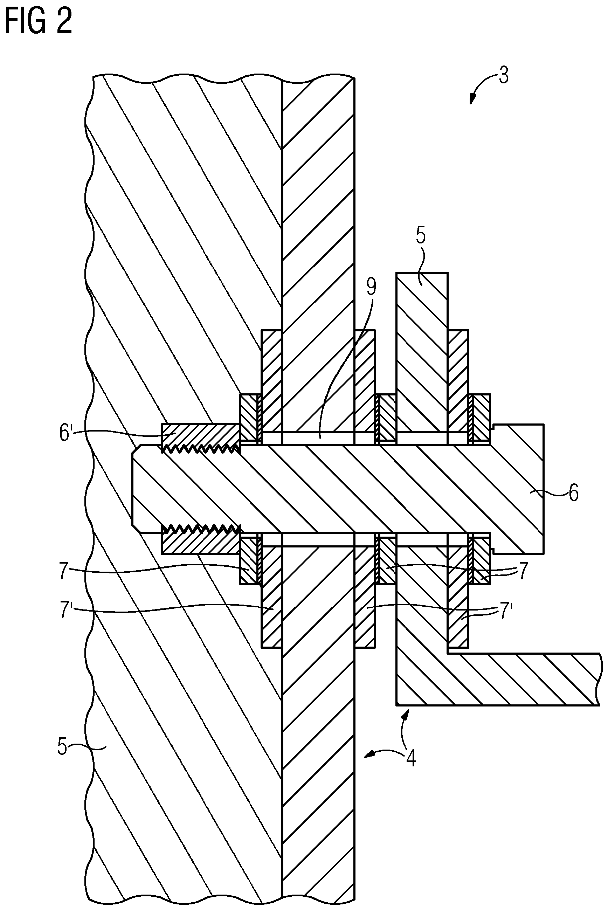

Im Folgenden wird ein Ausführungsbeispiel der Erfindung schematisch in den Figuren 1 und 2 dargestellt und nachfolgend näher beschrieben.

Dabei zeigen die
- Figur 1: schematisch als Hochspannungseinrichtung 1 Stromkabel 2 an einem Freileitungsmast 4, welcher Stahlprofil-Gitterstäbe als Tragelemente 5 umfasst, und
- Figur 2: schematisch einen Ausschnitt aus einer erfindungsgemäßen Vorrichtung 3 zur Schwingungsdämpfung in der Hochspannungseinrichtung 1, mit beschichteten Unterlegscheiben als Zwischenelementen 7 zur mechanischen Dämpfung von Schwingungen im Freileitungsmast 4 der Figur 1.

In Figur 1 ist schematisch eine Hochspannungseinrichtung 1 mit Hochspannungs- bzw. Stromkabeln 2 dargestellt. Die elektrischen Kabel bzw. Leitungen 2 sind an einem Freileitungsmast als Trägeranordnung 4 über Isolatoren insbesondere hängend befestigt. Im Ausführungsbeispiel der Fig. 1 ist die Trägeranordnung 4 mit vier Armen ausgebildet, an welchen jeweils Kabel 2 angeordnet sind. Trägeranordnungen 4 können alternativ oder zusätzlich andere Hochspannungseinrichtungen 1 tragen, z. B. Trafos, Instrument Transformer, Leistungsschalter, Trenner und/oder Erder.

Die Trägeranordnung 4 weist die Form eines Stahlfachwerkmasts bzw. Gittermasts auf, mit insbesondere Stahlträgern als Tragelementen 5. Die Tragelemente 5 sind z. B. L-, T- oder Doppel-T-förmig, mit hoher mechanischer Stabilität. Alternativ oder zusätzlich zu Stahlträgern können auch Tragelementen 5 aus anderen Materialien verwendet werden, z. B. aus Gusseisen, Holz, Kunststoff, Verbundwerkstoffen und/oder Karbon. Die Tragelemente 5 sind derart zueinander angeordnet und miteinander verbunden, dass eine hohe mechanische Stabilität der Trägeranordnung 4 entsteht. Die Tragelemente 5 sind z. B. derart zueinander angeordnet, dass Dreiecke, Vierecke, insbesondere Parallelogramme und/oder Pyramidenformen von den Tragelementen 5 gebildet bzw. eingeschlossen werden. Die Trägeranordnung 4 ist auf einem Fundament 8, insbesondere aus Beton, auf dem Untergrund angeordnet.

Durch den Aufbau der Trägeranordnung 4 in Form eines Stahlfachwerkmasts bzw. Gittermasts wird eine hohe mechanische Festigkeit bzw. Stabilität bei relativ geringem Gewicht erreicht. Abhängig der Verbindung der Tragelemente 5 untereinander, z. B. mechanisch steif durch Schweißen und/oder lösbare Verbindungen wie z. B. über Schrauben und/oder Bolzen, wird eine hohe Steifheit der Trägeranordnung 4 erreicht. Bei äußeren Belastungen der Trägeranordnung 4 durch z. B. Wind/Sturm und/oder Erdbeben, kann eine hohe Steifigkeit zu Problemen führen, insbesondere irreversiblen Beschädigungen bis hin zum Bruch von Tragelementen 5, und/oder einem Umknicken der Trägeranordnung 4. Dadurch wird die Hochspannungseinrichtung 1 irreversible zerstört und es kommt zu Störungen und Ausfällen im verbundenen elektrischen Stromnetz. Maßnahmen gegen eine Beschädigung und/oder Zerstörung der Trägeranordnung 4, wie z. B. Schwingungsdämpfer im Fundament, sind aufwendig, teuer und können häufig nur bestimmte Frequenzen von mechanischen Schwingungen der Trägeranordnung 4 dämpfen.

Erfindungsgemäß wird eine Dämpfung von Schwingungen der Trägeranordnung 4 durch eine Verringerung der Steifheit der Trägeranordnung 4 insbesondere ab einem bestimmten Schwellwert der auftretenden Kräfte erreicht. Die Verringerung der Steifheit der Trägeranordnung 4 wird über die Möglichkeit von Bewegungen der Tragelemente 5 gegeneinander erreicht. Dadurch können, z. B. bei Umwelteinflüssen wie Sturm und/oder Erdbeben, Schwingungen der Trägeranordnung 4 gedämpft werden und eine hohe mechanische Stabilität der Trägeranordnung 4 erreicht bzw. erhalten werden. Die Möglichkeit von Bewegungen der Tragelemente 5 gegeneinander bei gleichzeitig hoher mechanischer Stabilität der Trägeranordnung 4 wird dadurch erreicht, dass die Tragelemente 5 nicht fest miteinander verschweißt sind, sondern über Verbindungselemente mit speziellen Zwischenelementen verbunden sind. Die Verbindungselemente sind z. B. durch Bohrlöcher in den Tragelementen 5 geführt, und ergeben im Zusammenspiel mit der Größe der Bohrlöcher und den Zwischenelementen Dämpfungselemente.

In Figur 2 ist schematisch ein Ausschnitt aus einer erfindungsgemäßen Vorrichtung 3 zur Schwingungsdämpfung in einer Hochspannungseinrichtung 1 dargestellt, mit einer Trägeranordnung 4 gemäß der Figur 1. Verbindungselemente 6, 6' sind in Öffnungen, insbesondere Bohrungen bzw. Bohrlöchern 9 der Tragelemente 5 geführt, und ergeben über beschichtete Unterlegscheiben als Zwischenelemente 7, 7' eine mechanische Dämpfung von Schwingungen der Trägeranordnung 4. Die beschichteten Unterlegscheiben als Zwischenelemente 7, 7' sind zwischen den Verbindungselementen 6, 6' und den Tragelementen 5 und zwischen unterschiedlichen Tragelementen 5 angeordnet. Die Beschichtung ist entsprechend vordefinierten Gleitreibungskoeffizienten ausgewählt, um eine gewünschte Dämpfung bei definierter mechanischer Steifheit der Trägeranordnung 4 zu erreichen.

Die Unterlegscheiben 7 sind z. B. mit Schichten geringer Gleitreibungskoeffizienten, insbesondere im Bereich von 0,01 bis 0,3 beschichtet, um bei geringen Kräften und/oder hohen Frequenzen der Schwingung eine Dämpfung zu erreichen. Die Unterlegscheiben 7' sind alternativ oder zusätzlich z. B. mit Schichten großer Gleitreibungskoeffizienten, insbesondere im Bereich von größer 1 beschichtet, um bei großen Kräften und/oder niedrigen Frequenzen der Schwingung eine Dämpfung zu erreichen. Wie in Figur 2 dargestellt ist, können zwischen den Verbindungselementen 6, 6' und den Tragelementen 5 und zwischen unterschiedlichen Tragelementen 5 auch Stapel mit gleichen und/oder unterschiedlichen Unterlegscheiben 7 als Zwischenelementen angeordnet sein. Eine Dämpfung über einen breiten Bereich von Kräften und Schwingungsfrequenzen, insbesondere niedriger und hoher Schwingungsfrequenzen, ist damit möglich.

In Figur 2, welche einen Ausschnitt einer erfindungsgemäßen Vorrichtung 3 zur Schwingungsdämpfung zeigt, sind beispielhaft zwei L-förmige Tragelement 5 einer Trägeranordnung 4, insbesondere eines Freileitungsmasts, über Verbindungselemente, insbesondere eine Schraube 6 und eine Mutter 6', mit einander mechanisch verbunden. Jeweils ein Stapel aus einer Unterlegscheibe 7 als Zwischenelement mit einer Schicht mit geringem Gleitreibungskoeffizienten und einer Unterlegscheibe 7' als Zwischenelement mit einer Schicht mit großem Gleitreibungskoeffizienten, sind zwischen den zwei L-förmigen Tragelementen 5 angeordnet und zwischen einem Tragelement 5 und der Schraube 6 sowie zwischen einem Tragelement 5 und der Mutter 6' angeordnet. Dadurch wird ein Dämpfungselement ausgebildet, welches über einen großen Frequenz- und/oder Kräftebereich Schwingungen der Trägeranordnung 4 dämpft. Unterhalb eines Schwellwertes der unterschiedlichen und/oder entgegengesetzt gerichteten Kräfte auf die Tragelemente 5, d. h. unterhalb eines Schwellwertes der Differenz der Kräfte auf die zwei Tragelemente 5, führt die Haftreibung zu einer stabilen, steifen, räumlich fixierten Trägeranordnung 4 mit Tragelementen 5, welche die Lage zueinander nicht ändern.

Bei z. B. Wind und/oder Erdbeben wirken größere Kräfte auf die Tragelemente 5 als der Schwellwert, und die Unterlegscheiben 7, 7' beginnen durch die Beschichtung vordefiniert zu gleiten, d. h. die Gleitreibung wirkt. Dadurch wird die Schwingung bei vorbestimmten Kräften und/oder Frequenzen gedämpft, d. h. über die Gleitreibung wird die Bewegungsenergie, welche z. B. der Wind und/oder ein Erdbeben auf die Tragelemente 5 überträgt, in Wärmeenergie umgewandelt. Die Bewegung und/oder die Schwingung der Tragelemente 5 gegeneinander, und somit der Trägeranordnung 4 insgesamt, ist gedämpft.

Die zuvor beschriebenen Ausführungsbeispiele können untereinander kombiniert werden und/oder können mit dem Stand der Technik kombiniert werden. So können z. B. Trägeranordnungen 4 statt Kabel bzw. statt Leitungen 2 andere Elemente 2 der Hochspannungseinrichtung 1 tragen, insbesondere Trafos, Leistungsschalter, Trenner, und/oder Instrument Transformer. Die Trägeranordnungen 4 können keinen, einen, zwei oder mehr Arme aufweisen und z. B. einen dreieckigen oder viereckigen, insbesondere quadratischen Querschnitt aufweisen. Die Trägeranordnungen 4 können die Form eines Fachwerkmasts bzw. Gittermasts aufweisen, oder nur einzelne Tragelemente 5 umfassen. Tragelemente 5 können z. B. bandartig flach, L-förmig, T-förmig und/oder Doppel-T-förmig sein, und z. B. aus Stahl, Eisen, Holz, Kunststoffen, Verbundwerkstoffen, Keramiken und/oder Karbon bestehen oder diese Stoffe umfassen. Die Verbindungselemente 6 können Schrauben 6 und Muttern 6' umfassen, und/oder z. B. Bolzen umfassen, wobei insbesondere zwischen Bolzen 6 und Tragelement 5 jeweils wenigstens ein Zwischenelement 7, 7', insbesondere in Form einer beschichteten Unterlegscheibe, angeordnet ist. Die Tragelemente 5 sind über Verbindungselemente 6 miteinander verbunden, wobei Verbindungselemente 6 z. B. in Bohrlöchern 9 durch die Tragelemente 5 hindurch, geführt sind. Die Größe der Bohrlöcher 9 als durchgehende Öffnungen in den Tragelementen 5, bestimmt unter anderem die Freiheitsgrade bezüglich Bewegung der Verbindungselemente 6 der Vorrichtung 3 zur Schwingungsdämpfung, und somit unter anderem die Dämpfungsrate und die Dämpfungsamplitude, und die maximale Bewegung der Tragelemente 5 gegeneinander.

Stapel von Zwischenelementen 7 können gleiche und/oder zwei oder mehr unterschiedliche Zwischenelemente 7, insbesondere Unterlegscheiben mit unterschiedlichen Beschichtungen, aufweisen. Einzelne Zwischenelemente 7 können auf unterschiedlichen Seiten unterschiedliche Beschichtungen aufweisen, oder Schichtstapel aus unterschiedlichen Stoffen aufweisen. Die Zwischenelemente 7 und/oder Stapel von Zwischenelementen 7, 7' können z. B. nur zwischen Tragelementen 5 angeordnet sein, oder nur zwischen Verbindungselement 6, 6' und Tragelement 5, oder nur zwischen Verbindungselementen 6, 6'.

### Bezugszeichenliste

- 1: Hochspannungseinrichtung
- 2: Element der Hochspannungseinrichtung, insbesondere Kabel
- 3: Vorrichtung zur Schwingungsdämpfung
- 4: Trägeranordnung, z. B. Freileitungsmast
- 5: Tragelement, z. B. Stahlträger
- 6: Verbindungselement (Schraube 6, Mutter 6')
- 7: Zwischenelement (beschichtete Unterlegscheibe 7 für geringe Reibung und beschichtete Unterlegscheibe für erhöhte Reibung 7')
- 8: Fundament
- 9: Öffnung im Tragelement, z. B. durchgehende Bohrung

## Patentansprüche

1. Vorrichtung (3) zur Schwingungsdämpfung in Hochspannungseinrichtungen (1), mit einer Trägeranordnung (4) für Elemente (2) der Hochspannungseinrichtung (1), welche Tragelemente (5) umfasst, die über Verbindungselemente (6, 6') miteinander verbunden sind, wobei zwischen den Verbindungselementen (6, 6') und den Tragelementen (5) und/oder zwischen unterschiedlichen Tragelementen (5) Zwischenelemente (7, 7') angeordnet sind, welche ausgebildet sind eine Schwingungsdämpfung zu bewirken, wobei die Zwischenelemente (7) beschichtete Unterlegscheiben sind,
**dadurch gekennzeichnet, dass** jeweils ein Stapel von unterschiedlichen Zwischenelementen (7, 7'), einem Zwischenelement (7) mit Beschichtung für geringere Reibung und einem Zwischenelement mit höherer Reibung (7'), in Verbindung mit wenigstens einem Tragelement (5) und mit wenigstens einem Verbindungselement (6, 6') ein Dämpfungselement für mechanische Schwingungen ausbilden, mit einem Stapel von unterschiedlichen Zwischenelementen (7, 7') zwischen zwei Tragelementen (5) und/oder einem Stapel von unterschiedlichen Zwischenelementen (7, 7') jeweils zwischen einem jeweiligen Träger (5) und einem Verbindungselement (6, 6').

2. Vorrichtung (3) nach Anspruch 1, **dadurch gekennzeichnet, dass** die Zwischenelemente (7) mit einem Polymer, insbesondere Teflon, PTFE und/oder PCTFE, einem Metall, insbesondere Silber, und/oder Graphit beschichtet sind.

3. Vorrichtung (3) nach einem der Ansprüche 1 oder 2, **dadurch gekennzeichnet, dass** die Beschichtung der Zwischenelemente (7) einen bestimmten Gleit-Reibungskoeffizienten auf dem Material der Tragelemente (5) aufweist, insbesondere im Bereich von 0,01 bis 0,3 und/oder im Bereich von größer 1.

4. Vorrichtung (3) nach Anspruch 1, **dadurch gekennzeichnet, dass** die Zwischenelemente (7') Unterlegscheiben aus einem elastischen Material, insbesondere Kunststoff und/oder Gummi sind.

5. Vorrichtung (3) nach einem der vorhergehenden Ansprüche, **dadurch gekennzeichnet, dass** die Trägeranordnung (4) ein Gittermast, insbesondere ein Stahlfachwerksmast und/oder T-förmiger Mast ist.

6. Vorrichtung (3) nach einem der vorhergehenden Ansprüche, **dadurch gekennzeichnet, dass** die Tragelemente (5) T-Träger oder Doppel-T-Träger, insbesondere aus Stahl, sind.

7. Vorrichtung (3) nach einem der vorhergehenden Ansprüche, **dadurch gekennzeichnet, dass** die Verbindungselemente (6, 6') Schrauben (6) mit Muttern (6') und/oder Bolzen sind, insbesondere aus Stahl.

8. Vorrichtung (3) nach Anspruch 7, **dadurch gekennzeichnet, dass** die Verbindungselemente (6, 6') ausgebildet sind, die Tragelemente (5) über Öffnungen (9) in den Tragelementen (5) zu verbinden, insbesondere über durchgehende Bohrungen.

9. Vorrichtung (3) nach Anspruch 8, **dadurch gekennzeichnet, dass** die Öffnungen (9) derart ausgestaltet sind, dass die Verbindungselemente (6, 6') in den Tragelementen (5) beweglich gelagert sind, insbesondere mit einem Freiheitsgrad bezüglich der Bewegung abhängig einer zu dämpfenden Schwingung und/oder einer bestimmten Erdbebenstufe.

10. Vorrichtung (3) nach Anspruch 8, **dadurch gekennzeichnet, dass** die Verbindungselemente (6, 6') in den Öffnungen (9) ein Spiel im Bereich von Mikrometern oder bis zu Millimetern aufweisen.

11. Vorrichtung (3) nach einem der vorhergehenden Ansprüche, **dadurch gekennzeichnet, dass** jeweils wenigstens ein Zwischenelement (7, 7'), insbesondere zwei unterschiedliche Zwischenelemente (7, 7'), in Verbindung mit wenigstens einem Tragelement (5), insbesondere mit zwei Tragelementen (5), und mit wenigstens einem Verbindungselement (6, 6'), insbesondere wenigstens zwei unterschiedlichen Verbindungselementen (6, 6'), ein Dämpfungselement für mechanische Schwingungen ausbilden.

12. Vorrichtung (3) nach einem der vorhergehenden Ansprüche, **dadurch gekennzeichnet, dass** jeweils ein Stapel von unterschiedlichen Zwischenelementen (7, 7') in Verbindung mit zwei Tragelementen (5) und mit wenigstens einem Verbindungselement (6, 6') ein Dämpfungselement für mechanische Schwingungen ausbilden.

13. Vorrichtung (3) nach einem der vorhergehenden Ansprüche, **dadurch gekennzeichnet, dass** die Vorrichtung (3) von einem Freileitungsmast, einem Tragmast eines Hochspannungsleistungsschalters und/oder einem Tragmast eines Instrument Transformers umfasst ist.

14. Verfahren zur Schwingungsdämpfung in Hochspannungseinrichtungen, unter Verwendung einer Vorrichtung (3) nach einem der vorhergehenden Ansprüche, **dadurch gekennzeichnet, dass** Verbindungselemente (6, 6') Tragelemente (5) einer Trägeranordnung (4) einer Hochspannungseinrichtung (1) mechanisch stabil räumlich fixieren und beim Auftreten von mechanischen Schwingungen an der Hochspannungseinrichtung (1) die Verbindungselemente (6, 6') über eine vorbestimmte Gleitreibung mit den Tragelementen (5) sowie über ein räumlich vorbestimmtes Spiel bezüglich der Tragelemente (5) die mechanische Schwingung definiert dämpfen.

15. Verfahren nach Anspruch 14, **dadurch gekennzeichnet, dass** die Verbindungselemente (6, 6') eine mechanische Schwingung zwischen Tragelementen (5) dämpfen durch zwischen den Tragelementen (5) und/oder zwischen Tragelementen (5) und Verbindungselementen (6, 6') angeordneten Zwischenelementen (7, 7') mit einem bestimmten Gleit-Reibungskoeffizienten zwischen Tragelement (5) und Zwischenelement (7, 7'), insbesondere im Bereich von 0,01 bis 0,3 und/oder im Bereich von größer 1, insbesondere über eine Beschichtung der Zwischenelemente (7, 7'), und/oder durch ein vorbestimmtes Spiel der Verbindungselemente (6, 6') zu den Tragelementen (5), insbesondere im Bereich von Mikrometern bis hin zu Millimetern.

## Claims

1. Apparatus (3) for damping vibrations in high-voltage devices (1), having a carrier arrangement (4) for elements (2) of the high-voltage device (1), said arrangement comprising support elements (5) which are connected to one another via connecting elements (6, 6'), wherein intermediate elements (7, 7'), which are configured to damp vibrations, are arranged between the connecting elements (6, 6') and the support elements (5) and/or between different support elements (5), wherein the intermediate elements (7) are coated washers, **characterized in that** in each case a stack of different intermediate elements (7, 7'), an intermediate element (7) with a coating for lower friction and an intermediate element (7') with higher friction, in conjunction with at least one support element (5) and with at least one connecting element (6, 6'), forms a damping element for mechanical vibrations, with a stack of different intermediate elements (7, 7') between two support elements (5) and/or a stack of different intermediate elements (7, 7') in each case between a respective carrier (5) and a connecting element (6, 6').

2. Apparatus (3) according to Claim 1, **characterized in that** the intermediate elements (7) are coated with a polymer, in particular Teflon, PTFE and/or PCTFE, a metal, in particular silver, and/or graphite.

3. Apparatus (3) according to either of Claims 1 and 2, **characterized in that** the coating of the intermediate elements (7) has a determined coefficient of sliding friction on the material of the support elements (5), in particular in the range of 0.01 to 0.3 and/or in the range of greater than 1.

4. Apparatus (3) according to Claim 1, **characterized in that** the intermediate elements (7') are washers composed of an elastic material, in particular plastic and/or rubber.

5. Apparatus (3) according to one of the preceding claims, **characterized in that** the carrier arrangement (4) is a lattice mast, in particular a steel framework mast and/or T-shaped mast.

6. Apparatus (3) according to one of the preceding claims, **characterized in that** the support elements (5) are T beams or double-T beams, in particular composed of steel.

7. Apparatus (3) according to one of the preceding claims, **characterized in that** the connecting elements (6, 6') are screws (6) with nuts (6') and/or bolts, in particular composed of steel.

8. Apparatus (3) according to Claim 7, **characterized in that** the connecting elements (6, 6') are configured to connect the support elements (5) via openings (9) in the support elements (5), in particular via continuous bores.

9. Apparatus (3) according to Claim 8, **characterized in that** the openings (9) are designed in such a way that the connecting elements (6, 6') are mounted in the support elements (5) in a movable manner, in particular with a degree of freedom with respect to movement in dependence on a vibration to be damped and/or a determined earthquake level.

10. Apparatus (3) according to Claim 8, **characterized in that** the connecting elements (6, 6') have play in the range of micrometres or up to millimetres in the openings (9).

11. Apparatus (3) according to one of the preceding claims, **characterized in that** in each case at least one intermediate element (7, 7'), in particular two different intermediate elements (7, 7'), in conjunction with at least one support element (5), in particular with two support elements (5), and with at least one connecting element (6, 6'), in particular at least two different connecting elements (6, 6'), forms/form a damping element for mechanical vibrations.

12. Apparatus (3) according to one of the preceding claims, **characterized in that** in each case a stack of different intermediate elements (7, 7') in conjunction with two support elements (5) and with at least one connecting element (6, 6') forms a damping element for mechanical vibrations.

13. Apparatus (3) according to one of the preceding claims, **characterized in that** the apparatus (3) is comprised by a power transmission mast, a support mast of a high-voltage circuit breaker and/or a support mast of an instrument transformer.

14. Method for damping vibrations in high-voltage devices, using an apparatus (3) according to one of the preceding claims, **characterized in that** connecting elements (6, 6') spatially fix support elements (5) of a carrier arrangement (4) of a high-voltage device (1) in a mechanically stable manner, and when mechanical vibrations occur on the high-voltage device (1), the connecting elements (6, 6') damp the mechanical vibration in a defined manner by means of a predetermined sliding friction with the support elements (5), and also by means of spatially predetermined play with respect to the support elements (5).

15. Method according to Claim 14, **characterized in that** the connecting elements (6, 6') damp a mechanical vibration between support elements (5) by way of intermediate elements (7, 7') which are arranged between the support elements (5) and/or between support elements (5) and connecting elements (6, 6') and which have a determined coefficient of sliding friction between support element (5) and intermediate element (7, 7'), in particular in the range of 0.01 to 0.3 and/or in the range of greater than 1, in particular by means of a coating of the intermediate elements (7, 7'), and/or by way of predetermined play between the connecting elements (6, 6') and the support elements (5), in particular in the range of micrometres up to millimetres.

## Revendications

1. Installation (3) d'amortissement des vibrations dans des dispositifs (1) à haute tension, comprenant un agencement (4) à poutrelles pour des éléments (2) du dispositif (1) à haute tension, qui comprend des éléments (5) porteurs, qui sont reliés entre eux par des éléments (6, 6') de liaison, dans laquelle, entre les éléments (6, 6') de liaison et les éléments (5) porteurs et/ou entre des éléments (5) porteurs différents, sont disposés des éléments (7, 7') intermédiaires, qui sont constitués pour provoquer un amortissement des vibrations, dans laquelle les éléments (7) intermédiaires sont des rondelles revêtues,
**caractérisée en ce que** respectivement une pile d'éléments (7, 7') intermédiaires différents, un élément (7) intermédiaire à revêtement pour un frottement assez petit et un élément intermédiaire à frottement (7') plus grand, en liaison avec au moins un élément (5) porteur et avec au moins un élément (6, 6') de liaison, forment un élément d'amortissement de vibrations mécaniques par une pile d'éléments (7, 7') intermédiaires différents entre deux éléments (5) porteurs et/ou une pile d'éléments (7, 7') intermédiaires différents respectivement entre un élément (5) porteur respectif et un élément (6, 6') de liaison.

2. Installation (3) suivant la revendication 1, **caractérisée en ce que** les éléments (7) intermédiaires sont revêtus d'un polymère, en particulier de téflon, de PTFE et/ou de PCTFE, d'un métal, en particulier d'argent et/ou de graphite.

3. Installation (3) suivant l'une des revendications 1 ou 2, **caractérisée en ce que** le revêtement des éléments (7) intermédiaires a un coefficient de frottement au glissement déterminé sur le matériau des éléments (5) porteurs, en particulier dans la plage de 0,01 à 0,3 et/ou dans la plage supérieure à 1.

4. Installation (3) suivant la revendication 1, **caractérisée en ce que** les éléments (7') intermédiaires sont des rondelles en un matériau élastique, en particulier en matière plastique et/ou en caoutchouc.

5. Installation (3) suivant l'une des revendications précédentes, **caractérisée en ce que** l'agencement (4) porteur est un mât en treillis, en particulier un mât en treillis en acier et/ou un mât en forme de T.

6. Installation (3) suivant l'une des revendications précédentes, **caractérisée en ce que** les éléments (5) porteurs sont des poutrelles en T ou des poutrelles à double T, en particulier en acier.

7. Installation (3) suivant l'une des revendications précédentes, **caractérisée en ce que** les éléments (6, 6') de liaison sont des vis (6) avec des écrous (6') et/ou des boulons, en particulier en acier.

8. Installation (3) suivant la revendication 7, **caractérisée en ce que** les éléments (6, 6') de liaison sont constitués pour relier les éléments (5) porteurs par des ouvertures (9) dans les éléments (5) porteurs, en particulier par des trous traversants.

9. Installation (3) suivant la revendication 8, **caractérisée en ce que** les ouvertures (9) sont conformées, de manière à ce que les éléments (6, 6') de liaison soient montés, de manière mobile dans les éléments (5) porteurs en ayant, en particulier, un degré de liberté en ce qui concerne le mouvement indépendamment d'une vibration à amortir et/ou d'un niveau déterminé de tremblement de terre.

10. Installation (3) suivant la revendication 8, **caractérisée en ce que** les éléments (6, 6') de liaison ont dans les ouvertures (9) un jeu de l'ordre de microns ou jusqu'à des millimètres.

11. Installation (3) suivant l'une des revendications précédentes, **caractérisée en ce que** respectivement au moins un élément (7, 7') intermédiaire, en particulier deux éléments (7, 7') intermédiaires, en liaison avec au moins un élément (5) porteur, en particulier avec deux éléments (5) porteurs, et avec au moins un élément (6, 6') de liaison, en particulier au moins deux éléments (6, 6') de liaison différents, forment un élément d'amortissement de vibrations mécaniques.

12. Installation (3) suivant l'une des revendications précédentes, **caractérisée en ce que** respectivement une pile d'éléments (7, 7') intermédiaires différents en liaison avec deux éléments (5) porteurs et avec au moins un élément (6, 6') de liaison, forment un élément d'amortissement de vibrations mécaniques.

13. Installation (3) suivant l'une des revendications précédentes, **caractérisée en ce que** l'installation (3) est englobée dans un mât de ligne aérienne, un mât porteur d'un interrupteur de puissance en haute tension et/ou d'un mât porteur d'un instrument transformeur.

14. Procédé d'amortissement des vibrations dans des dispositifs à haute tension, en utilisant une installation (3) suivant l'une des revendications précédentes, **caractérisé en ce que** les éléments (6, 6') de liaison immobilisent dans l'espace d'une manière stable mécaniquement des éléments (5) porteurs d'un agencement (4) à poutrelles d'un dispositif (1) à haute tension et, lorsque des vibrations mécaniques apparaissent sur le dispositif (1) à haute tension, les éléments (6, 6') de liaison amortissent, d'une manière définie par un frottement à glissement déterminé à l'avance avec les éléments (5) porteurs ainsi que par un jeu déterminé à l'avance dans l'espace par rapport aux éléments (5) porteurs, les vibrations mécaniques.

15. Procédé suivant la revendication 14, **caractérisé en ce que** les éléments (6, 6') de liaison amortissent une vibration mécanique entre des éléments (5) porteurs en ayant entre les éléments (5) porteurs et/ou entre des éléments (5) porteurs et des éléments (7, 7') intermédiaires disposés entre les éléments (6, 6') de liaison, un coefficient de frottement au glissement déterminé entre éléments (5) porteurs et éléments (7, 7') intermédiaires, en particulier dans la plage de 0,01 à 0,3 et/ou dans la plage supérieure à 1, en particulier par un revêtement des éléments (7, 7') intermédiaires et/ou par un jeu déterminé à l'avance des éléments (6, 6') de liaison par rapport aux éléments (5) porteurs, en particulier dans la plage de microns allant jusqu'à des millimètres.
